# EUROPEAN PATENT APPLICATION

(11) **EP 4 821 680 A1**
(43) Date of publication of application: **14.10.2026**
(21) Application number: 25809932.4
(22) Date of filing: 08.04.2025
(51) Int. Cl.: B32B 27/20, B32B 27/28, B32B 27/12, B32B 9/04, B32B 9/00, B32B 17/02, B32B 17/10, B32B 37/12, B32B 37/06, B32B 37/10

(54) **METHOD FOR MANUFACTURING FIREPROOF PAD**

(30) Priority: 07.05.2024 KR 20240059995; 07.06.2024 KR 20240074276; 07.04.2025 KR 20250044610
(71) Applicant: LG Energy Solution, Ltd., Seoul 07335 (KR)
(72) Inventor: JEONG, Jaehoon, Daejeon 34122 (KR); LEE, Jegwon, Daejeon 34122 (KR)
(74) Representative: Plasseraud IP
(86) International application number: PCT/KR2025/004707
(87) International publication number: WO 2025/234616

(57) **Abstract**

A manufacturing method of a fire-resistant pad according to the present disclosure comprises a step of mixing silicone and aerogel to form a silicone-aerogel composite, wherein the content of the aerogel is 0.5 wt.% or more and 40 wt.% or less based on the total mixing amount of the silicone-aerogel composite.

## Description

### [TECHNICAL FIELD]

### CROSS REFERENCE TO RELATED APPLICATION(S)

The present application claims priority to and the benefit of Korean patent application no. KR10-2024-0059995, filed on May 7, 2024, Korean patent application no. KR10-2024-0074276, filed on June 7, 2024, and Korean patent application no. KR10-2025-0044610, filed on April 7, 2025, the entire contents of which are incorporated herein by reference.

The present disclosure relates to a manufacturing method of a fire-resistant pad, and more particularly, to a manufacturing method of a fire-resistant pad that comprises a process of producing a solid silicone-aerogel composite.

### [BACKGROUND]

As mobile devices have been increasingly developed, and the demand for such mobile devices has increased, the demand for secondary batteries as energy sources is also rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer, and a wearable device.

A battery cell of the secondary battery is manufactured by incorporating an electrode assembly together with an electrolyte into a secondary battery case, and the electrode assembly is manufactured by laminating and/or winding a positive electrode, a separator, and a negative electrode. A plurality of the manufactured battery cells are laminated to constitute a battery module or a battery pack.

In accordance with driving of the cell, heat may be generated in the battery cell, and if the heat is transferred to and accumulated in adjacent battery cells, a battery thermal runaway propagation occurs.

In order to prevent such problems, much research is being conducted into arranging a fire-resistant pad between battery cells to thereby prevent ignition inside a battery pack. In particular, manufacturing methods of fire-resistant pads having excellent fire resistance and high manufacturing efficiency are being studied.

### [DETAILED DESCRIPTION OF THE INVENTION]

### [Technical Problem]

The present disclosure has been designed to solve the above problems, and an object of the present disclosure is to provide a method of manufacturing a fire-resistant pad which comprises producing a solid silicone-aerogel composite.

Another object of the present disclosure is to provide a manufacturing method of a fire-resistant pad which comprises a thermal insulation layer containing the silicone-aerogel composite and a fire-resistant layer containing a fire-resistant material.

### [Technical Solution]

According to an aspect of the present disclosure, a manufacturing method of a fire-resistant pad comprises a step of mixing silicone and aerogel to form a silicone-aerogel composite, wherein the content of the aerogel is 0.5 wt.% or more and 40 wt.% or less based on the total mixing amount of the silicone-aerogel composite.

According to one specific embodiment, the content of the silicone may be 60 wt.% or more and 99.5 wt.% or less based on the total mixing amount of the silicone-aerogel composite.

According to one embodiment, the silicone may be provided in a solvent-free liquid phase, and the silicone-aerogel composite may be formed in a solid phase.

According to one embodiment, the content of the aerogel may be 15 wt.% or more and 30 wt.% or less.

According to one embodiment, the manufacturing method may further comprise the steps of: preparing a fire-resistant material including at least one of a non-combustible material and a flame-retardant material; laminating the fire-resistant material on at least one surface of the silicone-aerogel composite to form a laminate; and curing the laminate into a sheet to form a fire-resistant pad.

According to one embodiment, the step of forming a fire-resistant pad may be performed in one step by thermally pressing the laminate.

According to one embodiment, the step of forming a fire-resistant pad may comprise a first step of thermally pressing the laminate and forming it into a sheet; and a second step of thermally curing the thermally pressed laminate.

According to one embodiment, the fire-resistant material may comprise at least one of a mica fiber, a glass fiber, a basalt fiber, a ceramic paper, and a vermiculite-coated glass fiber cloth.

According to one embodiment, in the laminate, the silicone-aerogel composite may be arranged in one surface shape.

According to one embodiment, in the laminate, the silicone-aerogel composite may be arranged in a stripe shape.

According to one embodiment, the aerogel may comprise silica gel.

According to one embodiment, wherein the silicone may comprise a polydimethylsiloxane (PDMS) resin, and optionally further comprise at least one of a crosslinking agent and a catalyst.

According to one embodiment, based on the total mixing amount of the silicone-aerogel composite, the content of the polydimethylsiloxane resin may be 47 wt.% or more and 99.5 wt.% or less, the content of the crosslinking agent may be 0 wt.% or more and 10 wt.% or less, and the content of the catalyst may be 0 wt.% or more and 3 wt.% or less.

According to one embodiment, the step of forming a laminated body may comprise a step of laminating an adhesive material on one surface of the fire-resistant material, and a step of laminating the silicone-aerogel composite on the adhesive material.

According to one embodiment, the adhesive material may comprise a polydimethylsiloxane(PDMS) resin, a crosslinking agent, and a catalyst, and optionally further comprise a coupling agent.

According to one embodiment, the content of the aerogel may be 30 wt.% or more and 40 wt.% or less.

According to one embodiment, the manufacturing method may comprise the steps of: providing a first layer containing a fire-resistant material; providing a first composite layer containing the silicone-aerogel composite on the first layer; providing a third layer containing the fire-resistant material on the first composite layer; curing the first composite layer to provide a second layer; providing a second composite layer containing the silicone-aerogel composite on the third layer; providing a fifth layer containing the fire-resistant material on the second composite layer; and curing the second composite layer to provide a fourth layer, wherein the fire-resistant material may comprise at least one of a mica fiber, a glass fiber, a basalt fiber, a ceramic paper, and a vermiculite-coated glass fiber cloth.

According to one embodiment, the first layer, the third layer and the fifth layer may comprise the same fire-resistant material with each other.

According to one embodiment, the third layer may comprise a different fire-resistant material from that of the first layer and the fifth layer.

According to one embodiment, the step of providing a second layer is simultaneously thermally pressing the first layer, the first composite layer, and the third layer to cure the first composite layer into the second layer.

According to one embodiment, the step of providing a fourth layer is simultaneously thermally pressing the third layer, the second composite layer, and the fifth layer to cure the second composite layer into the fourth layer.

### [Advantageous Effects]

The present disclosure can provide a manufacturing method of a fire-resistant pad that forms a solid silicone-aerogel composite and thus has high price competitiveness and high process efficiency compared to a conventional silicone-aerogel composite manufactured by a wet process.

The present disclosure can provide a manufacturing method of a fire-resistant pad having excellent thermal insulation, heat resistance, and fire resistance.

### [BRIEF DESCRIPTION OF THE DRAWINGS]

FIG. 1 illustrates one step of a manufacturing method of a fire-resistant pad according to one embodiment.
FIG. 2 illustrates one step of a manufacturing method of a fire-resistant pad according to one embodiment.
FIG. 3 illustrates a fire-resistant pad manufactured according to the manufacturing method of a fire-resistant pad in FIG. 1.
FIG. 4 illustrates a fire-resistant pad manufactured according to the manufacturing method of a fire-resistant pad in FIG. 2.
FIG. 5 illustrates one step of a manufacturing method of a fire-resistant pad according to one embodiment.
FIG. 6 illustrates a fire-resistant pad manufactured according to the manufacturing method of a fire-resistant pad in FIG. 5.
FIGS. 7 to 15 each schematically illustrate one step of a manufacturing method of a fire-resistant pad according to one embodiment.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Now, a manufacturing method of a fire-resistant pad according to the present disclosure will be described.

A manufacturing method of a fire-resistant pad according to the present disclosure comprises a step of mixing silicone and aerogel to form a silicone-aerogel composite,
wherein the content of the aerogel is 0.5 wt.% or more and 40 wt.% or less based on the total mixing amount of the silicone-aerogel composite.

In one embodiment of this manufacturing method, the content of the silicone may be 60 wt.% or more and 99.5 wt.% or less based on the total mixing amount of the silicone-aerogel composite.

In one embodiment, the silicone is provided in a solvent-free liquid phase, and the silicone-aerogel composite is formed in a solid phase.

That is, the manufacturing method of a fire-resistant pad according to the present disclosure comprises a step of mixing silicone and aerogel by a solvent-free technique to form a solid silicone-aerogel composite. Therefore, the manufacturing method of a fire-resistant pad according to the present disclosure can omit a step of removing a solvent, and thus reduce the cost and time of the process and simplify the process, thereby facilitating mass production of the fire-resistant pad.

The step of mixing silicone and aerogel to form a silicone-aerogel composite is a step of mixing liquid silicone, which is a solvent-free type, with aerogel. The solvent-free liquid silicone may be a silicone solution including silicone as a base component and further including at least one of a crosslinking agent and a catalyst. In the mixing process, the solvent-free liquid silicone may be wrapped by an aerogel having a high specific surface area to form a solid silicone-aerogel composite. For example, the silicone-aerogel composite may have a dispersed powder form.

The silicone-aerogel composite can have low thermal conductivity, thereby exhibiting excellent thermal insulation performance. Specifically, the thermal conductivity of the silicone-aerogel composite can be 10 mW/m·K or more and 200 mW/m·K or less, preferably 10 mW/m·K or more and 150 mW/m·K or less.

The conventional wet manufacturing process of aerogel composites involves dispersing aerogel in a solvent, impregnating it in a fiber structure, growing an aerogel precursor, and drying the solvent. In this case, it takes about 1 to 3 days to grow the aerogel precursor on the surface of a fiber structure such as glass fiber, and subsequently, a process of selectively removing the solvent in the aerogel precursor using a method such as a supercritical fluid method or a room temperature pressurization method is required, so that the time and cost required for the process is high. In contrast, since the present disclosure forms an aerogel composite by mixing a solvent-free liquid silicone and aerogel, the process time is within 10 minutes, and the conventional solvent removal process is omitted, which provides the advantage that as compared to the wet manufacturing process, the process is simplified, and the time and cost required for the process are relatively short.

In one embodiment, based on the total mixing amount of the silicone-aerogel composite, the content of the aerogel is 0.5 wt.% or more and 40 wt.% or less. Also, the content of the silicone may be 60 wt.% or more and 99.5 wt.% or less. The content of the aerogel may be preferably 0.5 wt.% or more and 30 wt.% or less, more preferably 10 wt.% or more and 30 wt.% or less, and even more preferably 15 wt.% or more and 30 wt.% or less. If the content of the aerogel is less than 0.5 wt.%, it is difficult to form a silicone-aerogel composite when mixing silicone and aerogel, and the thermal insulation properties of the silicone-aerogel composite may also be deteriorated. If the content of the aerogel is greater than 40 wt.%, it may be difficult to form the silicone-aerogel composite into a pad.

In one embodiment, the aerogel may include silica gel.

In one embodiment, the solvent-free liquid silicone comprises a polydimethylsiloxane (PDMS) resin, and optionally may further comprise at least one of a crosslinking agent and a catalyst. Specifically, the polydimethylsiloxane resin may be a polydimethylsiloxane resin having a siloxane skeleton and having a vinyl group at the terminal (PDMS-vinyl terminated, ViMe₂SiO(Me₂SiO)_{X}SiMe₂Vi). Further, the molecular weight of the polydimethylsiloxane resin used in the silicone of the present disclosure may be 1,000 g/mol or more and 100,000 g/mol or less. As the crosslinking agent, a silicone-based crosslinking agent containing at least one Si-H structure may be used, and for example, polymethylhydrogen siloxane may be used. As the catalyst, a platinum catalyst may be used, or a peroxide-based initiator may be used in accordance with the curing mechanism.

In one embodiment, the constitution of silicone may include a polydimethylsiloxane resin and a crosslinking agent, or may include a polydimethylsiloxane resin and a catalyst, or may include a polydimethylsiloxane resin, a crosslinking agent, and a catalyst.

In one embodiment, based on the total mixing amount of the silicone-aerogel composite, the content of the polydimethylsiloxane resin may be 47 wt.% or more and 99.5 wt.% or less, the content of the crosslinking agent may be 0 wt.% or more and 10 wt.% or less, and the content of the catalyst may be 0 wt.% or more and 3 wt.% or less.

However, the constitution of the silicone is not limited thereto, and the silicone may further include a known flame-retardant additive to enhance the flame retardant effect. For example, the flame-retardant additive may include at least one selected from the group consisting of: nitrogen-based substances such as guanidine compounds and melamine compounds, phosphate-based substances such as triphenyl phosphate, trixylenyl phosphate, tricresyl phosphate, and triisophenyl phosphate, metal hydroxide-based substances such as Al(OH)₃ and Mg(OH)₂, ammonium-based substances such as ammonium polyphosphate, ammonium phosphate, and ammonium carbonate, and antimony-based substances.

Meanwhile, since only a mixing process is performed in the step of mixing silicone and aerogel to form a solid silicone-aerogel composite, the silicone-aerogel composite may exist in a dispersed powder form. Subsequently, a step of curing and pressurizing the dispersed powdery silicone-aerogel composite may be performed to form the silicone-aerogel composite into a sheet. In this regard, a manufacturing method of a fire-resistant pad will be described below.

The manufacturing method of a fire-resistant pad according to one embodiment of the present disclosure may further comprise:
a step of preparing a fire-resistant material including at least one of a non-combustible material and a flame-retardant material;
a step of laminating the fire-resistant material on at least one surface of the silicone-aerogel composite to form a laminate; and
a step of curing the laminate into a sheet to form a fire-resistant pad.

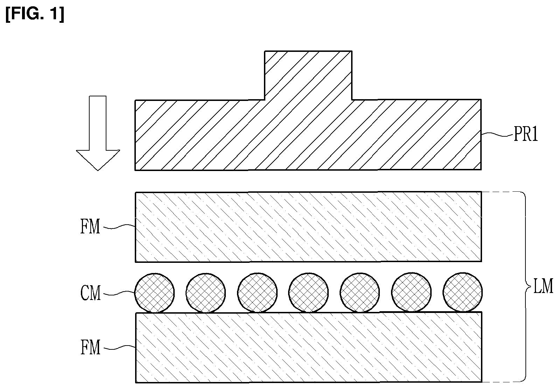

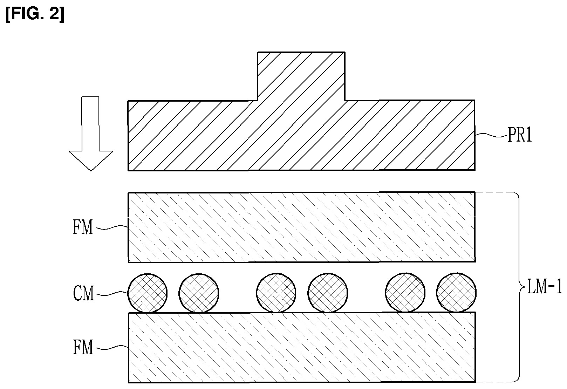

FIGS. 1 and 2 illustrate one step of the manufacturing method of a fire-resistant pad according to one embodiment.

Referring to FIG. 1, the step of preparing a fire-resistant material including at least one of a non-combustible material and a flame-retardant material may be a step of providing a fire-resistant material FM including at least one of a non-combustible material and a flame-retardant material such as a mica fiber, a glass fiber, a basalt fiber, a ceramic paper, and an aramid fiber. For example, the fire-resistant material FM can improve the non-combustible effect by using Alkaline Earth Silicate (AES) wool such as Morgan's Super wool product. The fire-resistant material FM may be provided in a sheet form, and for example, performed by providing the sheet-form fire-resistant material FM in a mold, the step of providing the fire-resistant material FM may be performed.

Next, a step of laminating the fire-resistant material on at least one surface of the silicone-aerogel composite to form a laminate is performed. This step is a step of laminating a fire-resistant material FM on one surface or both surfaces of a silicone-aerogel composite CM. For example, the step of forming a laminate may be a step of sequentially laminating a fire-resistant material FM, a silicone-aerogel composite CM, and a fire-resistant material FM. For example, a silicone-aerogel composite CM may be put onto a fire-resistant material FM provided in a mold, and then the fire-resistant material FM may be laminated thereon to form a laminate LM. Since the silicone-aerogel composite CM is in a dispersed powder form, it may be arranged in a desired form. In FIG. 1, the silicone-aerogel composite CM is arranged in one surface form by way of example. That is, the silicone-aerogel composite CM is provided in a layered form. Without being limited thereto, however, in the laminate LM-1 according to one embodiment, the silicone-aerogel composite CM may be arranged in a stripe shape spaced apart from each other as shown in FIG. 2.

In addition, in FIGS. 1 and 2, the fire-resistant material FM is laminated on both surfaces of the silicone-aerogel composite CM. That is, the fire-resistant material FM may be arranged on the outermost surface to provide the outer surface of the fire-resistant pad 1. Without being limited thereto, however, the fire-resistant material FM may be laminated on only one surface of the silicone-aerogel composite CM.

The step of forming the fire-resistant pad is a step of curing and forming the above laminate LM into a sheet.

In one embodiment, the step of curing the laminate into a sheet may be performed in one step. For example, as shown in FIG. 1, the laminate LM may be pressed and heated by a plate hot press PR1 or a hot roll press (roll-to-roll & heating) to simultaneously make the silicone-aerogel composite CM and the fire-resistant material FM into a thin film, cure and laminate them. That is, the laminate LM may be thermally pressed by the above method to form a fire-resistant pad in one step. Meanwhile, curing starts at a temperature of 50°C or higher, but the temperature at which curing starts may be adjusted depending on the content of the catalyst and crosslinking agent included in the silicone.

However, the embodiments of the manufacturing method of a fire-resistant pad according to the present disclosure is not limited thereto. Although not shown in the figure, in another embodiment of the present invention, the step of curing the laminate into a sheet to form a fire-resistant pad may be performed in two steps. For example, the step of curing and forming the laminate LM into a sheet to form a fire-resistant pad may comprise a first step of thermally pressing the laminate LM and forming it into a sheet shape; and a second step of thermally curing the thermally pressed laminate.

The first step may be pressing the laminate for a short time of 30 seconds or less to form it into a sheet. For example, the first step may be pressing the laminate with a press machine at 100°C and 1.5 kgf/cm² for 5 seconds. The first step may be performed at a high temperature, not at room temperature, so that the laminate can receive sufficient cohesive force and be easily formed into a sheet. The second step may be curing the laminate by heating alone without pressurization. For example, the laminate may be heated at 100°C for 10 minutes or more to cure the silicone-aerogel composite.

As described above, the step of curing the laminate into a sheet to form the fire-resistant pad may be formed in one step or two steps.

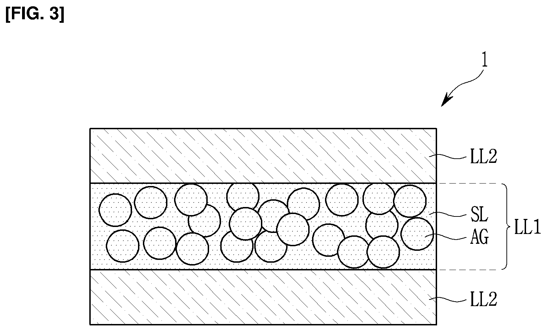

FIG. 3 illustrates a fire-resistant pad of one embodiment manufactured according to the manufacturing method of a fire-resistant pad in FIG. 1.

When the step of curing the laminate into a sheet to form the fire-resistant pad is completed, a fire-resistant pad 1 is formed as shown in FIG. 3.

Referring to FIG. 3, the fire-resistant pad 1 of one embodiment may include a thermal insulation layer LL1 in which a silicone-aerogel composite CM (see FIG. 1) is cured and a fire-resistant layer LL2 in which a fire-resistant material FM (see FIG. 1) is cured. The thermal insulation layer LL1 is a layer in which aerogel AG is cured in a state of being dispersed in particle form in silicone SL. The fire-resistant layer LL2 is a layer in which the above-mentioned fire-resistant material FM is provided in sheet form.

The thickness of one thermal insulation layer LL1 may be 0.1 mm or more and 5 mm or less. For example, the thickness of the thermal insulation layer LL1 may be 0.1 mm or more and 3 mm or less, or 0.1 mm or more and 2 mm or less, and specifically, may be 1 mm or 2 mm, but the embodiments are not limited thereto. The thickness of one fire-resistant layer LL2 may be 0.1 mm or more and 5 mm or less. For example, the thickness of the fire-resistant layer LL2 may be 0.1 mm or more and 3 mm or less, or 0.5 mm or more and 2 mm or less.

If the thickness of the thermal insulation layer LL1 is less than 0.1 mm, the thermal insulation performance of the fire-resistant pad 1 may be deteriorated. If the thickness of the fire-resistant layer LL2 is less than 0.1 mm, the fire-resistant performance of the fire-resistant pad 1 may be deteriorated. If the thickness of either one of the insulation layer LL1 and the fire-resistant layer LL2 is greater than 5 mm, the volume of the fire-resistant pad 1 may increase excessively, which may make it difficult to secure energy density relative to the volume of the battery when applied to the battery.

The thickness of the thermal insulation layer LL1 and the thickness of the fire-resistant layer LL2 may be identical to each other, or different from each other.

The total thickness of the fire-resistant pad 1 may be 0.2 mm or more and 5 mm or less. When the fire-resistant pad 1 includes only a thermal insulation layer LL1, it may include two or more thermal insulation layers LL1. As an example, the total thickness of the fire-resistant pad 1 may be 1 mm or more and 5 mm or less, but the embodiments are not limited thereto.

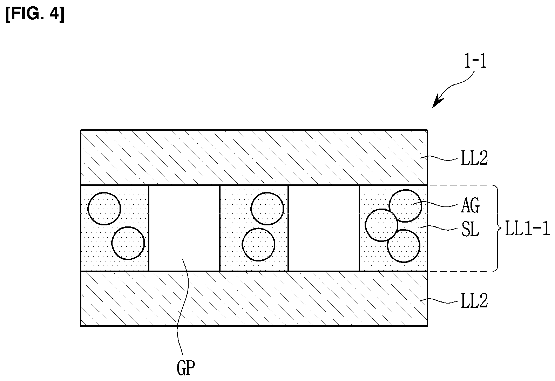

FIG. 4 illustrates a fire-resistant pad of one embodiment manufactured according to the manufacturing method of a fire-resistant pad in FIG. 2.

Referring to FIG. 4, as the silicone-aerogel composite CM (see FIG. 2) is arranged in a stripe shape, the composite layer LL1-1 in the fire-resistant pad 1-1 of one embodiment can be formed in a stripe shape with a predetermined gap GP. The fire-resistant pad 1-1 of one embodiment can further improve the thermal insulation performance because a gap GP filled with air exists between the composite layers LL1-1.

Meanwhile, it has been described above that the laminate LM, LM-1 is formed by laminating the silicone-aerogel composite and the fire-resistant material, but the embodiments of the manufacturing method of the fire-resistant pad according to the present disclosure are not limited thereto.

In the manufacturing method of the fire-resistant pad according to another embodiment of the present disclosure, the laminate can be formed so as to include the silicone-aerogel composite, the fire-resistant material, and the adhesive material.

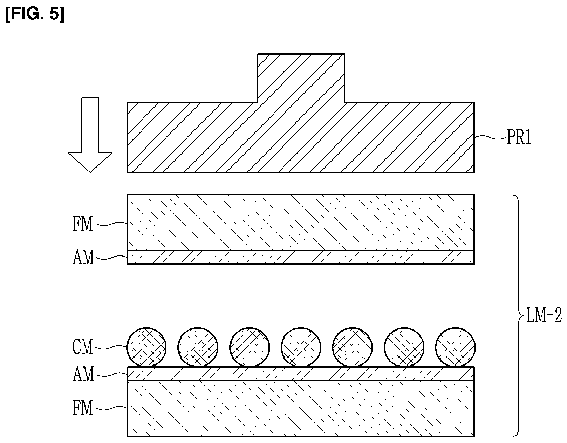

FIG. 5 illustrates one step of a manufacturing method of a fire-resistant pad according to one embodiment.

Referring to FIG. 5, in the manufacturing method of a fire-resistant pad according to one embodiment, the step of forming a laminate may comprise a step of laminating an adhesive material on one surface of the fire-resistant material and a step of laminating the silicone-aerogel composite on the adhesive material.

The adhesive material AM is provided for the purpose of increasing the adhesive strength between the silicone-aerogel composite CM and the fire-resistant material FM. Specifically, when the silicone-aerogel composite CM contains 30 wt.% or more of aerogel, an adhesive material AM can be provided to supplement the adhesive strength of the silicone-aerogel composite CM. However, the content of aerogel is not limited, and an adhesive material AM can be provided between the silicone-aerogel composite CM and the fire-resistant material FM as necessary. The specific composition of the adhesive material AM will be described later.

As shown in FIG. 5, the laminate LM-2 according to one embodiment may have a structure in which a fire-resistant material FM, an adhesive material AM, a silicone-aerogel composite CM, an adhesive material AM, and a fire-resistant material FM are laminated in sequence.

The adhesive material AM may be provided by spraying in the form of a spray, or roll-to-roll coating, or bar coating onto the fire-resistant material FM. The coating thickness of the adhesive material AM may be 10 µm or more and 0.5 mm or less, but the embodiments are not limited thereto.

In addition, the coating area of the adhesive material AM may not exceed the area of the fire-resistant material FM. Therefore, it is possible to prevent the adhesive material AM from being exposed to the outside of the fire-resistant material FM. Further, the adhesive material AM may be coated so as to cover the entire surface of the silicone-aerogel composite CM, thereby supplementing the adhesive properties of the entire surface of the silicone-aerogel composite CM.

Meanwhile, in the step of forming the laminate LM-2, the silicone-aerogel composite CM may be provided in an uncured state, or may be previously cured and provided in a sheet form.

Subsequently, a step of curing the laminate into a sheet to form a fire-resistant pad is performed. The laminate LM-2 may be thermally cured or thermally pressed. For example, if the silicone-aerogel composite CM and the adhesive material AM in the laminate LM-2 are in an uncured state, the laminate LM-2 may be thermally pressed to form a fire-resistant pad. Alternatively, if the silicone-aerogel composite CM in the laminate LM-2 is already in a cured state and the adhesive AM is in an uncured state, only the adhesive AM of the laminate LM-2 may be thermally cured to form a fire-resistant pad.

In one embodiment, the adhesive material AM may be a known adhesive material such as a silicone-based adhesive material, an acrylic-based adhesive material, or an epoxy-based adhesive material. For example, the adhesive material AM may be a silicone-based adhesive material, which may include a polydimethylsiloxane resin, a crosslinking agent, and a catalyst, and optionally further include a coupling agent. The polydimethylsiloxane resin may have a siloxane skeleton and may include one or more vinyl groups. In addition, the viscosity of the polydimethylsiloxane resin used in the silicone-based adhesive material of the present disclosure may be 5 cP or more and 5,000 cP or less. A silicon-based crosslinking agent containing at least one Si-H structure may be used as the crosslinking agent, and for example, polymethylhydrogen siloxane may be used. A platinum catalyst may be used as the catalyst. The coupling agent used herein may be a silane-based coupling agent represented by X-Si-OR₃ (where X=vinyl group, epoxy group, amino group, methacryloxy group, or mercapto group, and R=methoxy group, ethoxy group, dialkoxy group, or trialkoxy group).

Since the silicon-based adhesive material basically has PSA (Pressure Sensitive Adhesive) properties, it is possible to have sufficient adhesive strength even without a coupling agent. However, depending on the type of the fire-resistant material FM, the silicon-based adhesive material AM may be mixed so as to include a coupling agent, thereby further improving the adhesive strength.

For example, the adhesive material AM of one embodiment may include a polydimethylsiloxane resin, a crosslinking agent, a catalyst, and a coupling agent. For example, based on the total weight of the adhesive material AM, the content of the polydimethylsiloxane resin may be greater than 77 wt.% and less than 100 wt.%, the content of the crosslinking agent may be greater than 0 wt.% and less than 10 wt.%, the content of the catalyst may be greater than 0 wt.% and less than 3 wt.%, and the content of the coupling agent may be greater than 0 wt.% and less than 10 wt.%. For example, based on the total weight of the adhesive material, the content of the polydimethylsiloxane resin may be 95 wt.%, the content of the crosslinking agent may be 1 wt.%, the content of the catalyst may be 0.5 wt.%, and the content of the coupling agent may be 3.5 wt.%, but the embodiments are not limited thereto.

On the other hand, when the adhesive material AM is sprayed in the form of a spray, the adhesive material AM is stored separately as a first compounding agent and a second compounding agent in order to prevent thermal curing due to long-term storage, and the first compounding agent and the second compounding agent can be mixed and used just before spraying. For example, the first compounding agent may include a polydimethylsiloxane resin and a crosslinking agent, and the second compounding agent may include a polydimethylsiloxane resin, a catalyst, and a coupling agent. When the first compounding agent and the second compounding agent are mixed, the content ratio of each component is the same as described above.

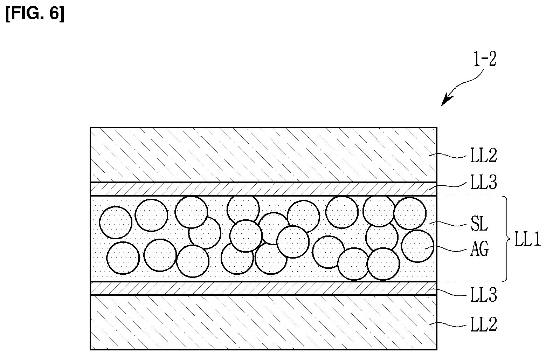

FIG. 6 illustrates a fire-resistant pad manufactured according to the manufacturing method of a fire-resistant pad in FIG. 5.

Referring to FIG. 6, the fire-resistant pad 1-2 may further comprise the thermal insulation layer LL1, the fire-resistant layer LL2 arranged on at least one surface of the thermal insulation layer LL1, and the adhesive layer LL3 arranged between the thermal insulation layer LL1 and the fire-resistant layer LL2. The adhesive layer LL3 is a layer formed by curing the above-mentioned adhesive material AM.

Meanwhile, the embodiments of the manufacturing method of the fire-resistant pad according to the present disclosure are not limited thereto.

The manufacturing method of the fire-resistant pad according to one embodiment comprises:
a step of providing a first layer containing a fire-resistant material;
a step of providing a first composite layer containing the silicone-aerogel composite on the first layer;
a step of providing a third layer containing the fire-resistant material on the first composite layer;
a step of curing the first composite layer to provide a second layer;
a step of providing a second composite layer containing the silicone-aerogel composite on the third layer;
a step of providing a fifth layer containing the fire-resistant material on the second composite layer; and
a step of curing the second composite layer to provide a fourth layer,
wherein the fire-resistant material may comprise at least one of a mica fiber, a glass fiber, a basalt fiber, a ceramic paper, and a vermiculite-coated glass fiber cloth (also referred as vermiculite cloth hereafter).

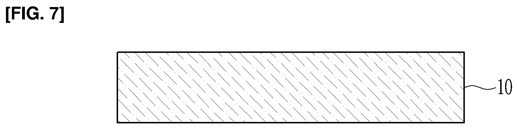

FIGS. 7 to 15 each schematically illustrate one step of a manufacturing method of a fire-resistant pad according to one embodiment.

Referring to FIG. 7, the manufacturing method of the fire-resistant pad according to the present disclosure comprises a step of providing a first layer containing a fire-resistant material. The fire-resistant material may be a non-combustible material. The first layer 10 is provided on an outer surface for ensuring non-combustible properties of the fire-resistant pad. The fire-resistant material may include at least one of a mica fiber, a glass fiber, a basalt fiber, a ceramic paper, and a vermiculite cloth. For example, ceramic paper may be used as the material of the first layer 10, and specifically, AES wool such as Morgan's Super wool product may be used to improve the non-combustible effect. The first layer 10 corresponds to the above-mentioned fire-resistant layer LL2.

Next, a step of providing a first composite layer containing the silicone-aerogel composite on the first layer is performed.

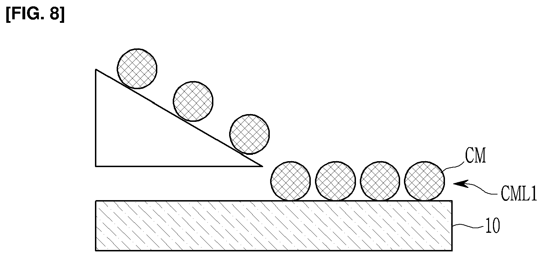

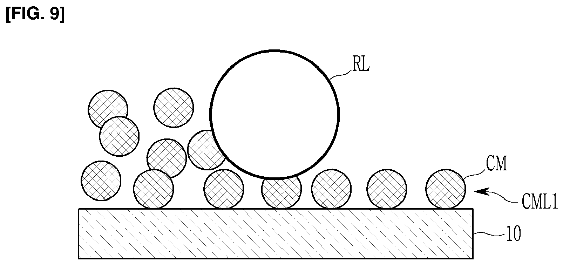

Referring to FIG. 8, the step of providing a first composite layer is a step of arranging a silicone-aerogel composite CM in a layered form on the first layer 10. FIG. 8 illustrates a method of uniformly spraying and coating a powdered silicone-aerogel composite CM on the first layer 10. Without being limited thereto, however, the silicone-aerogel composite CM may be uniformly coated on the first layer 10 using a roll bar RL as shown in FIG. 9. As shown in FIGS. 8 and 9, the first composite layer CML1 means a layer in which a silicone-aerogel composite CM in a state before curing is arranged.

Next, a step of providing a third layer containing a fire-resistant material on the first composite layer is performed.

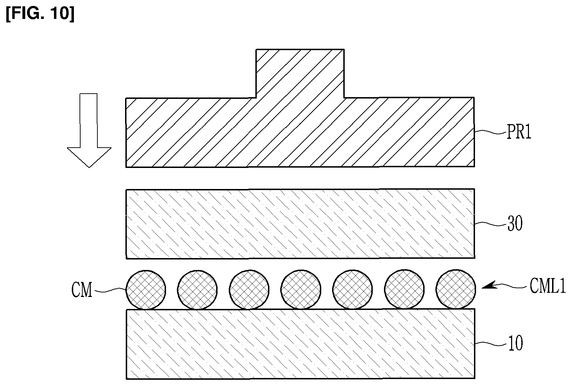

Referring to FIG. 10, a third layer 30 is provided on the first composite layer CML1. The third layer 30 includes a fire-resistant material. The third layer 30 corresponds to the above-mentioned fire-resistant layer LL2.

In one embodiment, the third layer 30 may comprise a different fire-resistant material than that of the first layer 10. For example, the first layer 10 may be a ceramic paper, and the third layer 30 may be a vermiculite cloth. Alternatively, in one embodiment, the third layer 30 may comprise the same fire-resistant material as the first layer 10. For example, the first layer 10 and the third layer 30 may be ceramic paper. Alternatively, the first layer 10 and the third layer 30 may be vermiculite cloth. The details of the ceramic paper and vermiculite cloth may be applied similarly as previously described.

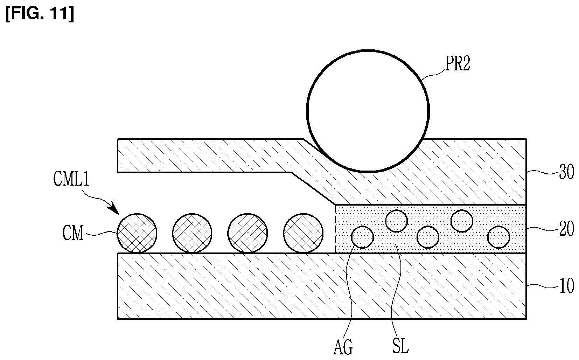

Referring to FIGS. 10 and 11 together, the step of curing the first composite layer CML1 to provide a second layer is a step of simultaneously thermally pressing the first layer 10, the first composite layer CML1, and the third layer 30. Thereby, the first layer 10, the first composite layer CML1, and the third layer 30 are formed into a thin film, and the first composite layer CML1 is cured to become the second layer 20. The thermally pressing method can use a known technique, and may use a plate hot press (PR1) method as shown in FIG. 10, or a roll-to-roll (PR2) method as shown in FIG. 11.

The second layer 20 includes silicone SL and thus functions as an adhesive layer that binds the first layer 10 and the third layer 30, and also includes aerogel AG and thus has thermal insulation properties. The second layer 20 corresponds to the above-mentioned thermal insulation layer LL1.

Next, a step of providing a second composite layer on the third layer is performed.

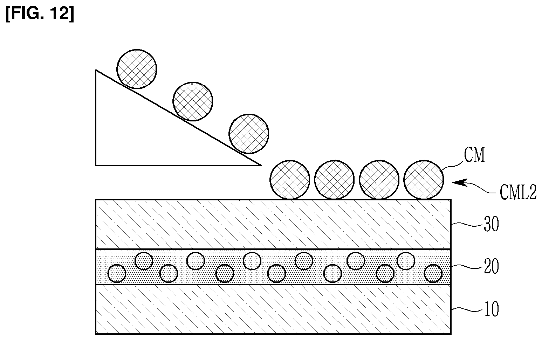

Referring to FIG. 12, the step of providing a second composite layer on the third layer is a step of coating a silicone-aerogel composite CM on the third layer 30 to provide a second composite layer CML2. The second composite layer CML2 refers to a layer in which a silicone-aerogel composite CM in a state before curing is arranged.

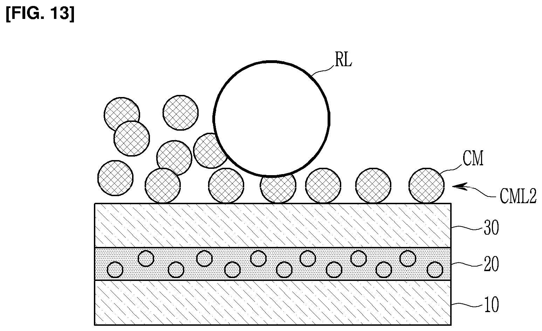

In FIG. 12, a method of uniformly spraying and coating a powdered silicone-aerogel composite CM on the third layer 30 is illustrated. Without being limited thereto, however, a silicone-aerogel composite CM may be uniformly coated on the third layer 30 using a roll bar RL as show in FIG. 13.

Subsequently, a step of providing a fifth layer containing a fire-resistant material on the second composite layer CML2 is performed.

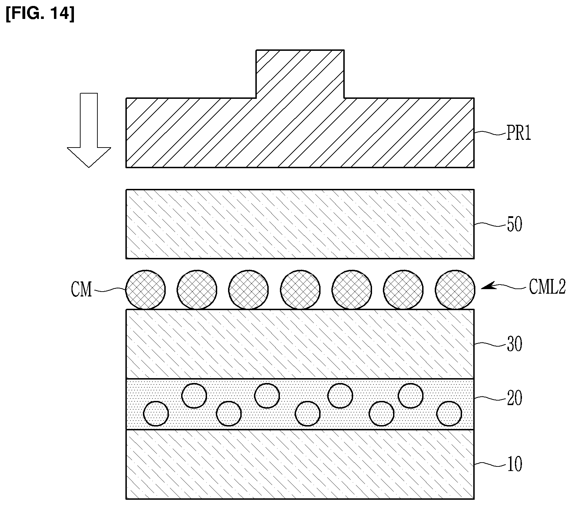

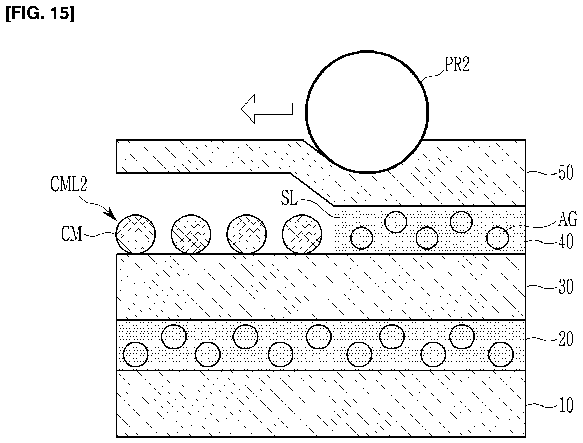

Referring to FIGS. 14 and 15 together, the step of providing a fifth layer is a step of providing a fifth layer 50 on the second composite layer CML2. The fifth layer 50, which is an outer layer, includes a fire-resistant material. The fifth layer 50 corresponds to the above-mentioned fire-resistant layer LL2.

In one embodiment, the fifth layer 50 may include the same fire-resistant material as the first layer 10. For example, the fifth layer 50 may be a vermiculite cloth or a ceramic paper.

After the fifth layer 50 is provided, a step of curing the second composite layer CML2 to provide a fourth layer 40 is performed. The step of providing a fourth layer 40 is performed by simultaneously thermally pressing the third layer 30, the second composite layer CML2, and the fifth layer 50. Thereby, the third layer 30, the second composite layer CML2, and the fifth layer 50 are formed in a thin film, and the second composite layer CML2 is cured to become the fourth layer 40. The thermally pressing method may use a known technique, and may use a plate hot press (PR1) method as shown in FIG. 14, or a roll-to-roll (PR2) method as shown in FIG. 15. The fourth layer 40 includes silicone SL and thus functions as an adhesive layer that bonds the third layer 30 and the fifth layer 50, and also includes aerogel AG and thus has thermal insulation properties. The fourth layer 40 corresponds to the above-mentioned thermal insulation layer LL1.

When the fourth layer 40 is cured, the manufacture of the fire-resistant pad is completed.

Meanwhile, in FIGS. 7 to 15, it has been described that the second layer 20 and the fourth layer 40 are cured in separate steps, but are not being limited thereto, and the second layer 20 and the fourth layer 40 may be cured simultaneously. Specifically, the fire-resistant pad can also be manufactured by laminating the first layer 10, the first composite layer CML1, the third layer 30, the second composite layer CML2, and the fifth layer 50 at once and then simultaneously thermally pressing them.

The manufacturing method of a fire-resistant pad according to one embodiment can manufacture a solid silicone-aerogel composite material as described above, thereby providing a method of manufacturing a fire-resistant pad that reduces the cost and time for required for the process and facilitates mass production

Further, the manufacturing method of a fire-resistant pad according to one embodiment can manufacture a fire-resistant pad by laminating a composite layer containing a silicone-aerogel composite and a fire-resistant layer containing a fire-resistant material, thereby providing a method of manufacturing a fire-resistant pad having improved fire resistance and processability.

Further, the manufacturing method of a fire-resistant pad according to one embodiment can exhibit excellent fire resistance and thermal insulation properties by alternately laminating the first layer, the third layer, and the fifth layer containing a fire-resistant material and the second layer and the fourth layer containing a silicone-aerogel composite. The step of providing the second layer and the fourth layer includes a step of producing a solid silicone-aerogel composite and thus can increase the efficiency of the process compared to a wet manufacturing process. Furthermore, since the second layer and the fourth layer include a thermosetting silicone-aerogel composite, the first to fifth layers are simultaneously cured during the process of thermally pressing and laminating them, so that the manufacturing process can be further simplified.

Hereinafter, Examples of the present disclosure will be described in detail so that those skilled in the art can easily carry out them. However, the present disclosure may be modified in various different ways, and is not limited to Examples set forth herein.

### 1. Production of the thermal insulation layers of Examples 1 to 3 and Comparative Examples 1 to 4

### Production of the thermal insulation layer of Example 1

Solvent-free silicone and aerogel were mixed in a weight ratio of 87.18:12.82 to form a solid silicone-aerogel composite. For the silicone, Dowsil^{™} 7626 from Dow was used as the PDMS resin, Syl-off^{™} 7028 from Dow was used as the crosslinking agent, and Syl-offTM 4000 from Dow was used as the Pt catalyst. EV5200 from Cabot was used as the aerogel.

The produced silicone-aerogel composite was hot-pressed at 150°C and 1.5 kgf/cm² for 30 seconds to form a pad, which was further thermally cured in an oven at 150°C for 10 minutes to produce the thermal insulation layer of Example 1 having a thickness of 0.7 to 2 mm.

### Production of the thermal insulation layer of Example 2

A thermal insulation layer of Example 2 was produced in the same manner as in the thermal insulation layer of Example 1, except that silicone and aerogel were mixed in a weight ratio of 83.61:16.39.

### Production of then thermal insulation layer of Example 3

A thermal insulation layer of Example 3 was produced in the same manner as in the thermal insulation layer of Example 1, except that silicone and aerogel were mixed in a weight ratio of 80.31:19.69.

### Production of the thermal insulation layer of Comparative Example 1

Only silicone was used without aerogel. That is, a thermal insulation layer of Comparative Example 1 was produced in the same manner as in the thermal insulation layer of Example 1, except that silicone was used instead of the silicone-aerogel composite in Example 1.

### Production of the thermal insulation layer of Comparative Example 2

A thermal insulation layer of Comparative Example 2 was produced in the same manner as in the thermal insulation layer of Example 1, except that silicone and aerogel were mixed in a weight ratio of 50:50. However, the silicone-aerogel composite was not made into a pad.

### Production of thermal insulation layer of Comparative Example 3

A thermal insulation layer of Comparative Example 3 was produced in the same manner as in the thermal insulation layer of Example 1, except that silicone and aerogel were mixed in a weight ratio of 30:70. However, the silicone-aerogel composite was not made into a pad.

### Production of the thermal insulation layer of Comparative Example 4

Pure aerogel containing 100% of aerogel without silicone was prepared. It was provided in powder form and was not made into a pad.

### 2. Evaluation of thermal conductivity of the thermal insulation layers of Examples 1 to 3 and Comparative Examples 1 to 4

The thermal conductivity of the thermal insulation layers of Examples 1 to 3 and Comparative Examples 1 to 4 produced above was evaluated using the TPS method (ISO 2207-2). In the case of Comparative Examples 2 to 4 which was not made into a pad, the thermal conductivity was measured in powder form.

**[Table 1]**

| Category | Thermal conductivity (mW/m·K) | Pad formation |
|---|---|---|
| Example 1 | 131.9 | O |
| Example 2 | 107.2 | O |
| Example 3 | 81.9 | O |
| Comparative Example 1 | 231 | O |
| Comparative Example 2 | 45 | X |
| Comparative Example 3 | 40.3 | X |
| Comparative Example 4 | 29.3 | X |

Referring to Table 1, it can be confirmed that the thermal insulation layers of Examples 1 to 3 exhibit sufficiently low thermal conductivity of about 150 mW/m·K or less, specifically, 131.9 mW/m·K or less, and thus have excellent thermal insulation properties. In particular, it was confirmed that the thermal insulation layers of Examples 2 and 3 have lower thermal conductivity of about 110 mW/m·K or less, specifically 107.2 mW/m·K or less and optimized thermal insulation property, as the aerogel content is 15 wt.% or more.

In addition, it can be confirmed that the thermal insulation layers of Examples 1 to 3 contain 0.5 wt.% or more and 40 wt.% or less, or 10 wt.% or more and 30 wt.% or less of aerogel, and 60 wt.% or more and 99.5 wt.% or less, or 70 wt.% or more and 90 wt.% or less of silicone, so that they can be easily made into a pad while having sufficient thermal insulation performance. In particular, it can be confirmed that the thermal insulation layers of Examples 2 and 3 contain 15 wt.% or more and 30 wt.% or less of aerogel and 70 wt.% or more and 85 wt.% or less of silicone, so they can be made into a pad without any deterioration in mechanical properties while having excellent thermal insulation performance.

The thermal insulation layer of Comparative Example 1 did not contain aerogel and thus exhibited very high thermal conductivity, and it is anticipated that it will be difficult to expect thermal insulation performance.

The thermal insulation layers of Comparative Examples 2 and 3 had low thermal conductivity while exceeding the aerogel content of 40 wt.%, but could not be made into a pad.

The thermal insulation layer of Comparative Example 4 is in a state of being 100% aerogel, and has very low thermal conductivity, but it exists in powder form and is not made into a pad, so it cannot be applied as a fire-resistant pad.

Therefore, the manufacturing method of a fire-resistant pad according to the present disclosure comprises a step of mixing silicone and aerogel to form a silicone-aerogel composite, wherein based on the total mixing amount of the silicone-aerogel composite, the content of the aerogel is 0.5 wt.% or more and 40 wt.% or less, and the content of the silicone is 60 wt.% or more and 99.5 wt.% or less, thereby capable of providing a method of manufacturing a fire-resistant pad having low thermal conductivity, exhibiting excellent thermal insulation properties, facilitating pad formation, and having excellent processability.

Although preferred embodiments of the present disclosure have been described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

FM: fire-resistant material
CM: silicone-aerogel composite
LM, LM-1, LM-2: laminate
1, 1-1, 1-2: fire-resistant pad
LL1: thermal insulation layer
LL2: fire-resistant layer
LL3: adhesive layer
CML1: first composite layer
CML2: second composite layer
10: first layer
20: second layer
30: third layer
40: fourth layer
50: fifth layer
AG: aerogel
SL: silicone

## Claims

1. A manufacturing method of a fire-resistant pad, comprising:
mixing silicone and aerogel to form a silicone-aerogel composite,
wherein the content of the aerogel is 0.5 wt.% or more and 40 wt.% or less based on the total mixing amount of the silicone-aerogel composite.

2. The manufacturing method of a fire-resistant pad according to claim 1,
wherein the silicone is provided in a solvent-free liquid phase, and
the silicone-aerogel composite is formed in a solid phase.

3. The manufacturing method of a fire-resistant pad according to claim 1,
wherein the content of the silicone is 60 wt.% or more and 99.5 wt.% or less based on the total mixing amount of the silicone-aerogel composite.

4. The manufacturing method of a fire-resistant pad according to claim 1,
wherein the content of the aerogel is 15 wt.% or more and 30 wt.% or less.

5. The manufacturing method of a fire-resistant pad according to claim 1, further comprising the steps of:
preparing a fire-resistant material including at least one of a non-combustible material and a flame-retardant material;
laminating the fire-resistant material on at least one surface of the silicone-aerogel composite to form a laminate; and
curing the laminate into a sheet to form a fire-resistant pad.

6. The manufacturing method of a fire-resistant pad according to claim 5,
wherein the forming a fire-resistant pad is performed in one step by thermally pressing the laminate.

7. The manufacturing method of a fire-resistant pad according to claim 5,
wherein the forming a fire-resistant pad comprises,
a first step of thermally pressing the laminate and forming it into a sheet shape; and
a second step of thermally curing the thermally pressed laminate.

8. The manufacturing method of a fire-resistant pad according to claim 5,
wherein the fire-resistant material comprises at least one of a mica fiber, a glass fiber, a basalt fiber, a ceramic paper, and a vermiculite-coated glass fiber cloth.

9. The manufacturing method of a fire-resistant pad according to claim 5,
wherein in the laminate, the silicone-aerogel composite is arranged in one surface shape.

10. The manufacturing method of a fire-resistant pad according to claim 5,
wherein in the laminate, the silicone-aerogel composite is arranged in a stripe shape.

11. The manufacturing method of a fire-resistant pad according to claim 1,
wherein the aerogel comprises silica gel.

12. The manufacturing method of a fire-resistant pad according to claim 1,
wherein the silicone comprises a polydimethylsiloxane (PDMS) resin, and optionally further comprises at least one of a crosslinking agent and a catalyst.

13. The manufacturing method of a fire-resistant pad according to claim 12,
wherein based on the total mixing amount of the silicone-aerogel composite, the content of the polydimethylsiloxane resin is 47 wt.% or more and 99.5 wt.% or less, the content of the crosslinking agent is 0 wt.% or more and 10 wt.% or less, and the content of the catalyst is 0 wt.% or more and 3 wt.% or less.

14. The manufacturing method of a fire-resistant pad according to claim 5,
wherein the forming a laminated body comprises the steps of: laminating an adhesive material on one surface of the fire-resistant material, and laminating the silicone-aerogel composite on the adhesive material.

15. The manufacturing method of a fire-resistant pad according to claim 14,
wherein the adhesive material comprises a polydimethylsiloxane(PDMS) resin, a crosslinking agent, and a catalyst, and optionally further comprises a coupling agent.

16. The manufacturing method of a fire-resistant pad according to claim 1, comprising the steps of:
providing a first layer containing a fire-resistant material;
providing a first composite layer containing the silicone-aerogel composite on the first layer;
providing a third layer containing the fire-resistant material on the first composite layer;
curing the first composite layer to provide a second layer;
providing a second composite layer containing the silicone-aerogel composite on the third layer;
providing a fifth layer containing the fire-resistant material on the second composite layer; and
curing the second composite layer to provide a fourth layer,
wherein the fire-resistant material comprises at least one of a mica fiber, a glass fiber, a basalt fiber, a ceramic paper, and a vermiculite-coated glass fiber cloth.

17. The manufacturing method of a fire-resistant pad according to claim 16,
wherein the first layer, the third layer and the fifth layer comprise the same fire-resistant material with each other.

18. The manufacturing method of a fire-resistant pad according to claim 16,
wherein the third layer comprises a different fire-resistant material from that of the first layer and the fifth layer.

19. The manufacturing method of a fire-resistant pad according to claim 16,
wherein the providing a second layer is simultaneously thermally pressing the first layer, the first composite layer, and the third layer to cure the first composite layer into the second layer.

20. The manufacturing method of a fire-resistant pad according to claim 16,
wherein the providing a fourth layer is simultaneously thermally pressing the third layer, the second composite layer, and the fifth layer to cure the second composite layer into the fourth layer.
